(19) Europäisches Patentamt
European Patent Office
Office européen des brevets

(11) **EP 4 275 857 A1**

(12) **EUROPÄISCHE PATENTANMELDUNG**

(43) Veröffentlichungstag:
**15.11.2023 Patentblatt 2023/46**

(21) Anmeldenummer: **22173040.1**

(22) Anmeldetag: **12.05.2022**

(51) Internationale Patentklassifikation (IPC):
**B29C 44/10** (2006.01)  **B29C 44/34** (2006.01)
**B29C 44/58** (2006.01)  **B29C 44/42** (2006.01)
**B29C 33/00** (2006.01)

(52) Gemeinsame Patentklassifikation (CPC):
**B29C 44/10; B29C 44/348; B29C 44/425;**
**B29C 44/58;** B29C 33/0061; B29K 2075/00

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
• **Windeck, Christian**
**41751 Viersen (DE)**

• **Goldbach, Verena**
**50825 Köln (DE)**
• **Wollersheim, Tobias**
**51375 Leverkusen (DE)**
• **Hopf, Stefan**
**40789 Monheim (DE)**
• **Franken, Klaus**
**51467 Bergisch Gladbach (DE)**

(74) Vertreter: **Levpat**
**c/o Covestro AG**
**Gebäude K12**
**51365 Leverkusen (DE)**

(54) **WERKZEUG ZUR HERSTELLUNG VON SCHAUMSTOFFEN**

(57) Die vorliegende Erfindung betrifft ein Werkzeug zur Herstellung von Schaumstoffen, ein Verfahren zur Herstellung von Schaumstoffen unter Verwendung des Werkzeugs sowie die durch das Verfahren hergestellten Schaumstoffe.

## Figur 1

EP 4 275 857 A1

**Beschreibung**

Die vorliegende Erfindung betrifft ein Werkzeug zur Herstellung von Schaumstoffen, ein Verfahren zur Herstellung von Schaumstoffen unter Verwendung des Werkzeugs sowie die durch das Verfahren hergestellten Schaumstoffe.

Bei den Schaumstoffen handelt es sich insbesondere um offenzellige Polyurethanhartschaumstoffe, die durch schlagartige Entspannung eines treibmittelhaltigen Reaktionsgemischs erhalten werden. Die Schaumstoffe können neben Urethangruppen (PUR) auch Isocyanuratgruppen (PIR) enthalten. In dieser Anmeldung sind mit der Bezeichnung PUR/PIR-Hartschaum bzw. PUR/PIR-Hartschaumstoff sowohl Hartschaumstoffe, welche im Wesentlichen Urethangruppen aufweisen, als auch Hartschaumstoffe enthaltend sowohl Urethan- als auch Isocyanuratgruppen gemeint, falls nicht anders angegeben.

PUR/PIR-Hartschaumstoffe sind seit langem bekannt. Ein wesentliches Einsatzgebiet ist die Temperaturisolierung. Dabei gewinnt die Anwendung von Vakuumisolationspaneelen (VIP) enthaltend PUR/PIR-Hartschaumstoffe zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Die Herstellung von offenzelligen PUR/PIR-Hartschaumstoffen ist ebenfalls prinzipiell bekannt. Im Allgemeinen werden dem Reaktionsgemisch bestimmte, zellöffnende Substanzen zugegeben, um eine Öffnung der Zellen beim Schaumprozess zu bewirken.

Die schlagartige Entspannung $CO_2$-haltiger Reaktionsgemische wird in WO 2001/98389 A1 beschrieben. Diese Patentanmeldung betrifft ein Verfahren zur Herstellung von Polyurethan-Blockschaum, wobei eine Kohlenstoffdioxid enthaltende Polyurethan-Reaktivmischung plötzlich von einem Druck oberhalb des Gleichgewichtslösungsdruckes des Kohlenstoffdioxids auf Normaldruck entspannt wird. Die flüssige Polyurethan-Reaktivmischung wird unter Freisetzung von gelöstem Kohlenstoffdioxid aufgeschäumt, die aufgeschäumte Mischung wird auf ein Substrat aufgebracht und anschließend zum Blockschaum ausgehärtet. Das Kohlenstoffdioxid wird zunächst bei einem wesentlich oberhalb des Gleichgewichtslösungsdruckes liegenden Druck in der Reaktivmischung oder mindestens einer der Komponenten Polyol und Isocyanat vollständig gelöst. Anschließend wird der Druck auf einen Druck nahe des Gleichgewichtslösungsdruckes herabgesetzt, wobei zwischenzeitlich der Gleichgewichtslösungsdruck unter Freisetzung geringer Mengen des Kohlenstoffdioxid unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlenstoffdioxid wieder vollständig aufgelöst wird.

WO 2018/162372 A1 offenbart ein Verfahren zur Herstellung eines harten offenzelligen Polyurethanschaumstoffs. Hierbei wird ein überkritisches $CO_2$ enthaltendes Reaktionsgemisch unter Gegendruck in ein Werkzeug eingebracht und schlagartig entspannt. Durch die besondere Zusammensetzung des Reaktionsgemischs werden Schaumstoffe besonders niedriger Dichte, hoher Offenzelligkeit und niedriger Zellgröße erhalten.

Optimale Dämmeigenschaften des Schaumstoffs ergeben sich dann, wenn er feinzellig, offenzellig und sehr homogen ist. Dafür dürfen weder große Lunker oder Blasen, noch wenig aufgeschäumte, nahezu kompakte Bereiche vorhanden sein. Als Konsequenz sollte das Reaktionsgemisch schnell in das Werkzeug eingebracht werden können, da es bevorzugt schnell reagiert und somit ein Reaktionsgemisch mit Anteilen signifikant unterschiedlich langer Verweildauer im Werkzeug zu Inhomogenitäten führen können. Außerdem sollte das Reaktionsgemisch vor der Druckentspannung auch gleichmäßig verteilt sein. Vor allem sollten Lufteinschlüsse vermieden werden, da insbesondere bei der schlagartigen Entspannung treibmittelhaltiger Reaktionsgemische die Bildung von Lunkern oder Blasen eine große Rolle spielt, da vorhandene Lufteinschlüsse auf ein Vielfaches ihrer ursprünglichen Größe expandiert werden. Zum schnellen Einbringen des Reaktionsgemisch ist eine niedrige Viskosität vorteilhaft, wobei hierdurch andererseits das Risiko der Freistrahl- oder Spritzerbildung erhöht wird.

Die Aufgabe der vorliegenden Erfindung bestand daher darin, ein Werkzeug zur Herstellung von gegenüber dem Stand der Technik verbesserten Schaumstoffen bereitzustellen, indem zumindest eines der genannten Probleme gelöst wird.

Überraschenderweise wurde gefunden, dass die Aufgabe gelöst werden konnte durch ein Werkzeug (1) zur Herstellung eines Schaumstoff-Formkörpers einer Breite B (4) aus einem Reaktionsgemisch in einer Kavität (3) umfassend

A. die Kavität (3) aufweisend eine innere Dimension der Breite B (4);
B. einen Anguss (2) zum Befüllen der Kavität (3) mit dem Reaktionsgemisch aufweisend

(1) eine Öffnung $Ö_{A1}$ zur Aufnahme des Reaktionsgemischs und
(2) eine Öffnung $Ö_{A2}$, die den Anguss (2) mit der Kavität (3) verbindet; und

C. eine Vorrichtung zur Erzeugung und Aufrechterhaltung eines Gegendrucks in der Kavität (3) sowie zur schlagartigen Verringerung des Gegendrucks in der Kavität (3),

wobei der Anguss (2) so gestaltet ist, dass das Befüllen der Kavität (3) mit dem Reaktionsgemisch über wenigstens 75% der Breite B (4) der Kavität (3) im Wesentlichen synchron beginnt.

Das zur Herstellung eines Schaumstoff-Formkörpers geeignete Werkzeug (1) umfasst also eine Kavität (3) der Breite B (4), die der Breite des Schaumstoff-Formkörpers entspricht, einen Anguss (2) und eine Vorrichtung zur Erzeugung und Aufrechterhaltung eines Gegendrucks in der Kavität (3) sowie zur schlagartigen Verringerung des Gegendrucks in der Kavität (3). Ein solches Werkzeug (1) ist geeignet, ein Reaktionsgemisch über den Anguss (2) unter Gegendruck in der Kavität (3) aufzunehmen und dort durch schlagartige Verringerung des Gegendrucks ("Entspannung" oder "Druckentspannung") das Reaktionsgemisch aufschäumen zu lassen, so dass aus dem Reaktionsgemisch der Schaumstoff-Formkörper entsteht. Das Werkzeug (1) weist zwei Öffnungen $Ö_{A1}$ bzw. $Ö_{A2}$ auf, durch die es das Reaktionsgemisch in den Anguss (2) aufnehmen kann bzw. die den Anguss (2) mit der Kavität (3) verbindet und durch die das Reaktionsgemisch aus dem Anguss (2) in die Kavität (3) übertreten kann. Der Anguss (2) ist erfindungsgemäß so gestaltet, dass der Eintritt des Reaktionsgemischs in die Kavität (3) über wenigstens 75% der Breite B (4) der Kavität (3) im Wesentlichen synchron erfolgt. Der Begriff "im Wesentlichen synchron" bedeutet hierbei, dass der Eintritt bis auf prozessbedingte Asynchronitäten synchron erfolgt.

In einer Ausführungsform umfasst der Anguss (2)

i. einen Verteilerkanal (5) mit einer Höhe $h_{VK}$ (6) und einer Tiefe $T_{VK}$ (8), aufweisend

(1) die Öffnung $Ö_{A1}$ zur Aufnahme des Reaktionsgemischs, und
(2) eine Öffnung $Ö_{VK}$ aufweisend eine Breite $B_{ÖVK}$, die wenigstens 75% der Breite B (4) entspricht, und eine Höhe $h_{ÖVK}$, die geringer ist als die Höhe $h_{VK}$ (6),

ii. ein Drosselfeld (11) mit einer Höhe $h_{DF}$ (12), die geringer ist als die Höhe $h_{VK}$ (6), und einer Tiefe $T_{DF}$ (13), die größer ist als die Tiefe $T_{VK}$ (8), aufweisend

(1) die Öffnung $Ö_{VK}$ zur Aufnahme des Reaktionsgemischs aus dem Verteilerkanal (5), und
(2) eine Öffnung $Ö_{DF}$ aufweisend eine Breite $B_{ÖDF}$, die wenigstens 75% der Breite B (4) entspricht, und eine Höhe $h_{ÖDF}$, die geringer ist als die Höhe $h_{VK}$ (6), wobei die Öffnung $Ö_{DF}$ der Öffnung $Ö_{A2}$ entsprechen kann.

Der Anguss (2) umfasst also bevorzugt einen Verteilerkanal (5) mit einer Höhe $h_{VK}$ (6) und einer Tiefe $T_{VK}$ (8) sowie ein Drosselfeld (11) mit einer Höhe $h_{DF}$ (12) und einer Tiefe $T_{DF}$ (13). In diesem Fall ist $h_{DF}$ (12) geringer als $h_{VK}$ (6), und $T_{DF}$ (13) ist größer als $T_{VK}$ (8). Der Verteilerkanal (5) ist also weniger tief als das Drosselfeld (11), dafür aber höher. Die Tiefe bezeichnet im Sinne dieser Anmeldung die Dimension eines Bauteils, in der sich ein Teil eines Reaktionsgemisch auf direktem Weg zur Kavität (3) bewegen würde. Handelte es sich also beispielsweise bei einem Bauteil um ein rechtwinklig gebogenes Rohr, dessen rechter Winkel die Teile X und Y des Rohrs verbindet, so verläuft die Tiefe des Teils X entlang der Fließrichtung eines Reaktionsgemisch in dem Teil X und die Tiefe des Teils Y entlang der Fließrichtung eines Reaktionsgemisch in dem Teil Y. Die Tiefe des Teils X stünde somit ebenfalls im rechten Winkel zur Tiefe des Teils Y. Der Verteilerkanal (5) weist außerdem die Öffnung $Ö_{A1}$, durch die er das Reaktionsgemisch aufnehmen kann, und eine Öffnung $Ö_{VK}$ auf, wobei diese Öffnung $Ö_{VK}$ eine Breite $B_{ÖVK}$, die wenigstens 75% der Breite B (4) entspricht, aufweist. Das Drosselfeld (11) weist ebenfalls die Öffnung $Ö_{VK}$, die also den Verteilerkanal (5) mit dem Drosselfeld (11) verbindet, und eine Öffnung $Ö_{DF}$ auf, wobei diese Öffnung $Ö_{DF}$ eine Breite $B_{ÖDF}$, die wenigstens 75% der Breite B (4) entspricht, aufweist. Außerdem weist die Öffnung $Ö_{DF}$ eine Höhe $h_{ÖDF}$ auf, die geringer ist als $h_{VK}$ (6). Bei der Öffnung $Ö_{DF}$ kann es sich um die Öffnung $Ö_{A2}$ handeln. In diesem Fall verbindet die Öffnung $Ö_{A2}$ das Drosselfeld (11) mit der Kavität (3). Die Öffnung $Ö_{DF}$ kann aber auch das Drosselfeld (11) mit einem weiteren Abschnitt des Angusses (2) verbinden, der dann wiederum über die Öffnung $Ö_{A2}$ den Anguss (2) mit der Kavität (3) verbindet.

In einer besonders bevorzugten Ausführungsform befindet sich die Öffnung $Ö_{A1}$ in einem Bereich der 30 - 70%, bevorzugt 40 - 60%, besonders bevorzugt 45 - 55% der Breite B (4) entspricht. In dieser Ausführungsform befindet sich die Öffnung $Ö_{A1}$ also etwa zentral in Bezug auf die Breite B (4) der Kavität (3). Hierbei kann der Verteilerkanal (5) zwei Enden (9) aufweisen, die von der Position der Öffnung $Ö_{A1}$ aus gesehen jeweils in Richtung einer ersten Begrenzung der Breite B (4) der Kavität (3) bzw. in Richtung einer zweiten Begrenzung der Breite B (4) der Kavität (3) positioniert sind. Hierbei kann der Verteilerkanal (5) insbesondere bevorzugt eine Spiegelebene aufweisen, die orthogonal zur Dimension der Breite B (4) der Kavität (3) vorliegen kann.

In einer Ausführungsform weist die Öffnung $Ö_{VK}$ eine Höhe $H_{ÖVK}$ auf, die 80 - 100% der Höhe $h_{DF}$ (12) entspricht.

In einer weiteren bevorzugten Ausführungsform umfasst der Anguss (2) weiterhin

iii. eine Umlenkung (14) mit einer Höhe $h_U$ (15), die geringer ist als die Höhe $h_{VK}$ (6), und die so gestaltet ist, dass das Reaktionsgemisch bei einem Fließen von dem Drosselfeld (11) in die Kavität (3) wenigstens eine Richtungsänderung um 70 - 110 ° erfährt, aufweisend

(1) die Öffnung $Ö_{DF}$ zur Aufnahme des Reaktionsgemischs aus dem Drosselfeld (11)
(2) die Öffnung $Ö_{A2}$ aufweisend eine Breite $B_{ÖA2}$, die wenigstens 75% der Breite B (4) entspricht.

Bevorzugt umfasst der Anguss (2) also eine Umlenkung (14), die eine Höhe $h_U$ (15), die geringer ist als $h_{VK}$ (6), aufweist. Weiterhin ist die Umlenkung (14) in dieser Ausführungsform so gestaltet, dass das Reaktionsgemisch beim Fließen von dem Drosselfeld (11) durch die Umlenkung (14) in die Kavität (3) wenigstens eine Richtungsänderung um 70 - 110 ° erfährt. Eine Umlenkung (14) um 85 - 95 °, insbesondere um etwa 90 °, ist hierbei besonders bevorzugt. Der Winkel der Umlenkung (14) beschreibt hierbei den Winkel zwischen der Fließrichtung des Reaktionsgemischs vor der Richtungsänderung und der Fließrichtung nach der Richtungsänderung. Die Umlenkung (14) weist ebenfalls die Öffnung $Ö_{DF}$, die also das Drosselfeld (11) mit der Umlenkung (14) verbindet, und die Öffnung $Ö_{A2}$ auf. Überraschend wurde gefunden, dass durch die Präsenz einer solchen Umlenkung (14) das Risiko von Spritzern, die sich in der Kavität (3) von dem großen homogenen Teil des Reaktionsgemischs lösen, reduziert wird.

In einer bevorzugten Ausführungsform ist die Umlenkung (14) so gestaltet, dass das Reaktionsgemisch bei dem Fließen von dem Drosselfeld (11) in die Kavität (3) wenigstens zwei Richtungsänderungen um, unabhängig voneinander, jeweils 70 - 110 ° erfährt. Eine solche wenigstens zweifache Richtungsänderung sorgt dafür, dass das oben beschriebene Risiko der Spritzerbildung weiter minimiert wird. Theoretisch wäre auch denkbar, den Effekt einer einfachen Richtungsänderung um 70 - 110 ° beispielsweise mit einer zweifachen Richtungsänderung, von denen eine erste oder zweite oder beide einen Winkel von weniger als 70 ° aufweist bzw. aufweisen, zu erzielen. Dies erscheint jedoch zumindest im Hinblick auf die erhöhte Komplexität und den erhöhten Material- und Raumbedarf des Werkzeugs (1) nachteilig gegenüber einer einfachen Richtungsänderung um 70 - 110 ° und im Hinblick auf den erzielten Effekt gegenüber einer wenigstens zweifachen Richtungsänderung um, unabhängig voneinander, jeweils 70 - 110 °.

In einer Ausführungsform weist der Verteilerkanal (5) bevorzugt wenigstens ein Ende (9) auf, und die Höhe des Verteilerkanals (5) weist im Bereich des Endes (9) eine Höhe $h_{VK}'$ (7) auf, die geringer ist als $h_{VK}$ (6). Der Verteilerkanal (5) kann also über seine Breite einen veränderlichen Querschnitt aufweisen, insbesondere kann sich die Höhe des Verteilerkanals (5) ändern. Die Höhe $h_{VK}$ (6) beschreibt, wie dem Fachmann klar ist, die maximale Höhe des Verteilerkanals (5). Diese maximale Höhe weist der Verteilerkanal (5) bevorzugt in der Nähe der Öffnung $Ö_{A1}$ auf. Weiterhin bevorzugt weist der Verteilerkanal (5) in einem Bereich, der von der Öffnung $Ö_{A1}$ entfernt ist, beispielsweise im Bereich des Endes (9) des Verteilerkanals (5) eine Höhe $h_{VK}'$ (7) auf, die geringer ist als $h_{VK}$ (6). Besonders bevorzugt weist der Verteilerkanal (5) über einen gewissen Bereich seiner Breite eine konstante Höhe auf, zum Beispiel die Höhe $h_{VK}$ (6), ehe die Höhe des Verteilerkanals (5) sich dann kontinuierlich in Richtung dessen Endes bis zur Höhe $h_{VK}'$ (7) verringert. Insbesondere bevorzugt ist eine Ausführungsform, in der sich die Höhe des Verteilerkanals (5) in Richtung dessen Endes (9) bis zur Höhe $h_{DF}$ (12) verringert, so dass also im Bereich des Endes (9) des Verteilerkanals (5) dessen Höhe $h_{VK}'$ (7) die Höhe $h_{DF}$ (12) des Drosselfeldes (11) erreicht.

In einer bevorzugten Ausführungsform weist der Verteilerkanal (5) ein abgerundetes Ende (9) auf. Besonders bevorzugt ist hierbei, wenn das abgerundete Ende (9) einen Radius aufweist, der wenigstens 1/20, bevorzugt wenigstens 1/10, mehr bevorzugt wenigstens 1/4, der Tiefe des Verteilerkanals $T_{VK}$ (8) entspricht. Durch das abgerundete Ende (9) wird das Risiko eines Lufteinschlusses beim Einfließen des Reaktionsgemischs in diesen Bereich des Bauteils minimiert. Wie schon beschrieben weist gerade ein Verfahren, bei dem ein unter erhöhtem Druck (Gegendruck in der Kavität (3)) stehendes Reaktionsgemisch schlagartig entspannt wird, den Nachteil auf, dass Lufteinschlüsse sich durch die Entspannung extrem vergrößern und große Lunker im resultierenden Schaumstoff bilden. Somit reduziert ein abgerundetes Ende (9) des Verteilerkanals (5) das Risiko, dass sich Lunker im resultierenden Schaumstoff bilden.

Ein weiterer Gegenstand der Erfindung betrifft ein Verfahren zur Herstellung von Schaumstoffen aus einem Reaktionsgemisch umfassend die Schritte

A. Bereitstellen eines Reaktionsgemischs in einem Hochdruckmischkopf;

B. Einbringen des Reaktionsgemischs unter Gegendruck in die Kavität (3) eines erfindungsgemäßen Werkzeugs (1);

C. Aufschäumen des Reaktionsgemischs in der Kavität (3), um den Schaumstoff zu erhalten;

D. Entformen des in Schritt C erhaltenen Schaumstoffs.

In einer bevorzugten Ausführungsform erfolgt das Einbringen des Reaktionsgemischs unter Gegendruck in die Kavität (3) mit einer mittleren Geschwindigkeit von 0,2 - 4,5 m/s, bevorzugt 0,5 - 2,0 m/s.
In einer weiteren bevorzugten Ausführungsform ist das Reaktionsgemisch ein Polyurethanreaktionsgemisch ist.

Polyurethanreaktionsgemische sind dem Fachmann an sich bekannt. Sie umfassen in der Regel eine Isocyanatkomponente umfassend wenigstens ein Polyisocyanat und eine gegenüber Isocyanaten reaktive Zusammensetzung umfassend wenigstens eine gegenüber Isocyanaten reaktive Komponente, zum Beispiel ein Polyol.

Bevorzugt umfasst das Polyurethanreaktionsgemisch

A. eine gegenüber Isocyanaten reaktive Zusammensetzung umfassend

A1) eine gegenüber Isocyanaten reaktive Komponente umfassend mindestens eine Polyolkomponente mit einer Funktionalität f> 2,5, die wenigstens ein Polyetherpolyol, Polyesterpolyolen, Polycarbonatpolyol, Polyether-Polycarbonatpolyol, Polyetheresterpolyol oder Mischungen daraus umfasst;
A2) eine Katalysatorkomponente;
A3) gegebenenfalls Hilfs- und Zusatzstoffe;

B. eine Polyisocyanatkomponente
C. eine Treibmittelkomponente.

In einer Ausführungsform beträgt der Anteil aller in der Polyolkomponente A1) vorhandenen primären OH-Funktionen an der Gesamtzahl der endständigen OH-Funktionen in der Polyolkomponente A1) mindestens 30%.

In einer Ausführungsform stehen die Anzahl der NCO-Gruppen in der Polyisocyanatkomponente B. und die Anzahl der gegenüber Isocyanaten reaktiven Wasserstoffatome der gegenüber Isocyanaten reaktiven Zusammensetzung A. in einem Zahlenverhältnis von $\geq$ 110:100 bis $\leq$ 300:100 zueinander.

In einer weiteren Ausführungsform ist das Polyurethanreaktionsgemisch im Wesentlichen frei von zellöffnenden Verbindungen oder enthält keine zellöffnenden Verbindungen. Der Ausdruck "im Wesentlichen frei von" bedeutet hierbei, dass das Polyurethanreaktionsgemisch zellöffnende Verbindungen höchstens in einer Menge enthält, die einer unbeabsichtigten Verunreinigung entspricht, z.B. weniger als 0,1 Gew.-%, bezogen auf die Gesamtmenge der gegenüber Isocyanaten reaktiven Zusammensetzung A. In einer anderen Ausführungsform umfasst die gegenüber Isocyanaten reaktive Komponente einen Zellöffner.

In einer Ausführungsform besteht die gegenüber Isocyanaten reaktive Zusammensetzung A. zu mindestens 65 Gew.-% aus der Polyolkomponente A1), die eine Hydroxylzahl zwischen 280 bis 600 mg KOH/g, gemessen nach DIN 53240-2:2007, und eine Funktionalität von $\geq$ 2,8 bis $\leq$ 6,0 aufweist. In einer weiteren Ausführungsform beträgt der Anteil der in der gegenüber Isocyanaten reaktiven Zusammensetzung A. vorhandenen primären OH-Funktionen an der Gesamtzahl aller endständigen OH-Funktionen in der gegenüber Isocyanaten reaktiven Zusammensetzung A mindestens 35%. In einer bevorzugten Ausführungsform besteht die gegenüber Isocyanaten reaktive Zusammensetzung A. zu mindestens 65 Gew.-%, bezogen auf die Gesamtmenge an A. ausgenommen A2) und A3), aus der Polyolkomponente A1), die eine Hydroxylzahl zwischen 280 bis 600 mg KOH/g, gemessen nach DIN 53240-2:2007, und eine Funktionalität von $\geq$ 2,8 bis $\leq$ 6,0 aufweist und beträgt der Anteil der in der gegenüber Isocyanaten reaktiven Zusammensetzung A. vorhandenen primären OH-Funktionen an der Gesamtzahl aller endständigen OH-Funktionen in der gegenüber Isocyanaten reaktiven Zusammensetzung A mindestens 35%.

In einer weiteren Ausführungsform besteht die gegenüber Isocyanaten reaktive Zusammensetzung A. zu mindestens 60 Gew.-% aus Polyetherpolyol.

Die gegenüber Isocyanaten reaktive Zusammensetzung A. enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH-Funktionen an der Gesamtzahl der endständigen OH-Funktionen in der Polyolkomponente A1) beträgt bevorzugt mindestens 30%, mehr bevorzugt mindestens 35%, insbesondere bevorzugt mindestens 38%.

Die Polyolkomponente A1) zeichnet sich weiterhin dadurch aus, dass sie eine Funktionalität f von > 2,5, bevorzugt $\geq$ 2,6 bis $\leq$ 6,5 und besonders bevorzugt $\geq$ 2,8 bis $\leq$ 6,1 aufweist. Mit gegenüber Isocyanaten reaktiven Zusammensetzungen, in denen die Polyolkomponente A1) eine Funktionalität in diesen Bereichen aufweist, wird beim Einspritzen ein optimaler Viskositätsanstieg bis zur Entspannung des Gegendrucks gefunden und lassen sich die Schäume schneller entformen.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf. Dies wirkt sich besonders günstig auf die mechanischen Eigenschaften der Schäume aus.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Bevorzugt enthält die gegenüber Isocyanaten reaktive Zusammensetzung A. bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol. Diese bevorzugten Ausführungsformen zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol%. Der Einsatz von 100 mol% Ethylenoxid ist ebenfalls eine bevorzugte Ausführungsform.

Weiterhin können in der gegenüber Isocyanaten reaktiven Zusammensetzung A. niedermolekulare gegenüber Isocyanaten reaktive Verbindungen A4) enthalten sein, insbesondere können di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen gegenüber Isocyanaten reaktiven Verbindungen Anwendung finden, z.B. in der Funktion als Kettenverlängerungsmittel und/oder Vernetzungsmittel, und diese nicht auch unter die Definition der Polyolkomponente A1) fallen, kommen diese zweckmäßigerweise in einer Menge von bis zu 5 Gew.-%, bezogen auf das Gesamtgewicht der Zusammensetzung A. zum Einsatz.

Neben den oben beschriebenen Polyolen und gegenüber Isocyanaten reaktiven Verbindungen können in der Zusammensetzung A. weitere gegenüber Isocyanaten reaktive Verbindungen A5) enthalten sein, beispielsweise Graft-Polyole, Polyamine, Polyaminoalkohole und Polythiole. Selbstverständlich umfassen die beschriebenen gegenüber Isocyanaten reaktiven Komponenten auch solche Verbindungen mit gemischten Funktionalitäten.

Eine bevorzugte gegenüber Isocyanaten reaktive Zusammensetzung A. umfasst die Polyolkomponente A1), die eine Hydroxylzahl von 280 bis 600 mg KOH/g und eine Funktionalität von $\geq 2,8$ bis $\leq 6,0$ aufweist, in einer Menge von mindestens 65 Gew.-%, insbesondere mindestens 80 Gew.-% und ganz besonders bevorzugt mehr als 90 Gew.-%, bezogen auf die Gesamtmenge an A. ausgenommen die Komponenten A2) und A3), und der Anteil an primären OH-Funktionen in der Zusammensetzung A. beträgt mindestens 35% (bezogen auf alle endständigen OH-Funktionen in der Zusammensetzung A.

In einer anderen Ausführungsform umfasst die Treibmittelkomponente C. oder besteht die Treibmittelkomponente C. aus $CO_2$ im überkritischen Zustand.

Die Treibmittelkomponente C. wird in einer solchen Menge verwendet, wie sie zur Erzielung einer dimensionsstabilen Schaummatrix und einer gewünschten Rohdichte nötig ist. In der Regel sind dies 0,5 - 30 Gewichtsteile Treibmittel bezogen auf 100 Gewichtsteile der Zusammensetzung A. ausgenommen A2) und A3).

Das $CO_2$ als physikalisches Treibmittel kann im überkritischen oder nahekritischen Zustand eingesetzt werden. Im Rahmen der vorliegenden Erfindung liegen nahekritische Bedingungen dann vor, wenn die folgende Bedingung erfüllt ist: (Tc - T)/T $\leq$ 0,4 und/oder (pc - p)/p $\leq$ 0,4. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: (Tc - T)/T $\leq$ 0,3 und/oder (pc - p)/p $\leq$ 0,3 und besonders bevorzugt (Tc - T)/T $\leq$ 0,2 und/oder (pc - p)/p $\leq$ 0,2.

Besonders geeignete Bedingungen für die Durchführung des erfindungsgemäßen Verfahrens bei Verwendung von $CO_2$ sind solche Drücke und Temperaturen oberhalb des kritischen Punktes von $CO_2$, also $\geq$ 73,7 bar und $\geq$ 30,9 °C, bevorzugt zwischen 74 bar und 350 bar sowie zwischen 31 °C und 100 °C, besonders bevorzugt zwischen 75 bar und 200 bar sowie zwischen 32 °C und 60 °C.

Als zusätzliche Treibmittel neben überkritischem $CO_2$ können physikalische Treibmittel eingesetzt werden. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente B) reagieren.

Die zusätzlichen physikalischen Treibmittel können ausgewählt sein aus der Gruppe aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Werden weitere Treibmittel zugesetzt, enthält die Treibmittelkomponente C. in einer Ausführungsform bevorzugt mehr als 60 Gew.-% überkritisches $CO_2$, besonders bevorzugt mehr als 75 Gew.-%.

Zusätzlich zu oder auch statt der physikalischen Treibmittel können auch chemische Treibmittel (auch "Co-Treibmittel") verwendet werden. Bei diesen handelt es sich besonders bevorzugt um Wasser und/oder Ameisensäure. Bevorzugt werden die Co-Treibmittel in einer Menge von 0 bis 6 Gew.-%, besonders bevorzugt von 0,5 bis 4 Gew.-%, bezogen auf die Gesamtmenge an Verbindungen mit gegenüber Isocyanatgruppen reaktiven Wasserstoffatomen in dem schaumbildenden Polyurethanreaktionsgemisch, eingesetzt.

Der Anteil des Treibmittels C. beträgt, jeweils bezogen auf die Gesamtmenge der Komponenten A. und C., bevorzugt $\geq$ 1 Gew.-% bis $\leq$ 30 Gew.-%, mehr bevorzugt $\geq$ 4 Gew.-% bis $\leq$ 20 Gew.-%., besonders bevorzugt $\geq$ 6 Gew.-% bis $\leq$ 16 Gew.-%; der Anteil des Treibmittels an dem Polyurethanreaktionsgemisch beträgt bevorzugt 0,5 Gew.-% bis 15 Gew.-%, mehr bevorzugt 2 Gew.-% bis 10 Gew.-%, besonders bevorzugt $\geq$ 3 Gew.-% bis $\leq$ 8 Gew.-%, jeweils bezogen auf die Gesamtmenge an Polyurethanreaktionsgemisch.

In einer weiteren Ausführungsform umfasst die gegenüber Isocyanaten reaktive Zusammensetzung A. eine Katalysatorkomponente A2), bevorzugt eine Katalysatorkomponente A2) in einer Menge von $\geq$ 0,01 bis < 2,0 Gew.-%, bezogen auf das Gesamtgewicht der gegenüber Isocyanaten reaktiven Zusammensetzung A..

Als Katalysatorkomponente A2) werden üblicherweise Verbindungen verwendet, welche die Reaktion der Hydroxylgruppen bzw. gegenüber Isocyanaten reaktiven Gruppen enthaltenden Verbindungen der Zusammensetzung A. mit den Isocyanatgruppen der Komponente B beschleunigen.

Die Katalysatorkomponente A2) kann A2a) mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di¬methyaminopropyl-N,N-dimethylpropan-1,3-diamin, Dimethyl-2-(2-amino¬ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

Daneben können eine oder mehrere weitere Verbindungen A2b), insbesondere die für die PUR/PIR-Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexahydrotriazin, Tetramethyl-ammoniumhydroxid, Natriumacetat, Natriumoctoat, Kaliumacetat, Kaliumoctoat, Natriumhydroxid.

Die Katalysatorkomponente A2) wird im Allgemeinen in einer Menge von 0,001 bis 5 Gew.-%, insbesondere von 0,05 bis 2,5 Gew.-%, bezogen auf das Gewicht der Zusammensetzung A., eingesetzt. Besonders bevorzugt enthält die Katalysatorkomponente A2) sowohl einbaubare Katalysatoren A2a) als auch nicht einbaubare Katalysatoren A2b). Insbesondere ist es bevorzugt, dass einbaubare Aminverbindungen und katalytisch aktive Salze in Kombination eingesetzt werden.

Die Katalysatoren A2a) und A2b) werden bevorzugt in einem molaren Verhältnis A2a)/A2b) von 0,1 bis 16,3 eingesetzt, besonders bevorzugt von 0,3 bis 10 und ganz besonders bevorzugt von 0,8 bis 6,0. Die Katalysatorkomponente A2) enthält bevorzugt als katalytisch aktive Verbindung A2a) eine in das Polyurethan einbaubare Aminverbindung und weiterhin die katalytisch aktive Verbindung A2b), bei welcher es sich um ein nicht in das Polyurethan einbaubares, katalytisch aktives Salz handelt, und das molare Verhältnis von A2a)/A2b) beträgt 0,1 bis 16,3, besonders bevorzugt von 0,3 bis 10 und ganz besonders bevorzugt von 0,8 bis 6,0. In einer besonders bevorzugten Ausführungsform werden 3-(Dimethylamino)Propylharnstoff und Kaliumacetat in einem molaren Verhältnis A2a)/A2b) von 0,1 bis 6,0, besonders bevorzugt von 0,3 bis 10 und ganz besonders bevorzugt von 0,8 bis 6,0, eingesetzt. Die bevorzugten Katalysatorverhältnisse bzw. Katalysatoren wirken sich besonders günstig auf einen definierten Viskositätsaufbau aus.

In einer Ausführungsform weist die gegenüber Isocyanaten reaktive Zusammensetzung A. eine Hilfs- und Zusatzkomponente A3) auf, die einen Stabilisator umfasst, bevorzugt einen Stabilisator in einer Menge von ≥ 0,05 bis ≤ 5 Gew.-%, bezogen auf das Gesamtgewicht der gegenüber Isocyanaten reaktiven Zusammensetzung A., umfasst.

Das Polyurethanreaktionsgemisch kann Hilfs- und Zusatzstoffe A3) enthalten. Die Hilfs- und Zusatzstoffe können zellöffnenden Verbindungen enthalten, umfassen jedoch bevorzugt im Wesentlichen keine oder sind frei von zellöffnenden Verbindungen. Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern.

Weitere Hilfs- und Zusatzstoffe A3), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Es werden häufig Polyether-Polydimethylsiloxan-Copolymere als Schaumstabilisatoren verwendet, vorzugsweise ein Polyethylenoxid-Polyether mit Oligodimethylsiloxan-Endgruppen, wobei die Zahl der Dimethylsiloxan-Einheiten vorzugsweise ≤ 5 ist.

Als Stabilisatoren können auch gesättigte und ungesättigte Kohlenwasserstoffe wie Paraffine, Polybutadiene, Fettalkohole sowie Ester, z.B. Ester von Carbonsäuren, eingesetzt werden. Bevorzugt werden solche Stabilisatoren, insbesondere Schaumstabilisatoren eingesetzt, die keine zellöffnende Wirkung haben.

Die Zusammensetzung A. enthält bevorzugt insgesamt maximal 3 Gew.-% Silikone und Polybutadiene, bezogen auf das Gesamtgewicht der Zusammensetzung A.

Weiterhin können als Stabilisatoren Tenside eingesetzt werden, beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Zusammensetzung A. insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Zusammensetzung A.

Das Polyurethanreaktionsgemisch umfasst bevorzugt eine Polyisocyanatkomponente B., also ein Isocyanat mit einer NCO-Funktionalität von ≥ 2.

Geeignete Polyisocyanate sind beispielsweise 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente B. werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO-Funktionalität f > 2 aufweisen und folgende Strukturformel aufweisen: C15H10N2O2 [C8H5NO]n, wobei n = ganze Zahl > 0, bevorzugt n = 1, 2, 3 und 4, ist. Höherkernige Homologe C15H10N2O2 [C8H5NO]m, m = ganze Zahl ≥ 4) können ebenfalls im Gemisch aus organischen Polyisocyanaten a) enthalten sein. Als Isocyanatkomponente B. weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) und A2) beschriebenen Polyolen.

Es ist möglich, dass das Isocyanat ein Präpolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Der NCO-Gehalt beträgt bevorzugt von ≥ 29,0 Gew.-% bis ≤ 32,0 Gew.-%, und weist bevorzugt eine Viskosität bei 25 °C von ≥ 80 mPa·s bis ≤ 2000 mPa·s, besonders bevorzugt von ≥ 100 mPa·s bis ≤ 800 mPa·s auf (dynamische Viskosität bestimmt nach DIN 53019, bei 25°C).

Die Anzahl der NCO-Gruppen in der Polyisocyanatkomponente B. und die Anzahl der gegenüber Isocyanaten reaktiven Gruppen der Komponente A. können beispielsweise in einem Zahlenverhältnis von ≥ 50:100 bis ≤ 300:100 zueinander stehen. Zur Herstellung der PolyurethanHartschaumstoffe werden in der Regel die Komponenten A. und B. in solchen Mengen zur Umsetzung gebracht, dass die Isocyanat-Kennzahl der Rezeptur 80 - 150, bevorzugt 105 - 135, besonders bevorzugt 110 - 125 beträgt. In diesem Bereich werden bevorzugt Urethangruppen gebildet. In einer anderen bevorzugten Ausführungsform beträgt die Isocyanat-Kennzahl 150 - 400. In diesem Bereich weisen die Schaumstoffe einen hohen Anteil an Isocyanurat-Funktionen auf, welche z.B. eine inhärente Flammwidrigkeit der Schaumstoffe bewirken.

Ein weiterer Gegenstand der vorliegenden Erfindung ist schließlich eine Verwendung des erfindungsgemäßen Werkzeug (1)s zur Herstellung eines Schaumstoffs, insbesondere eines Polyurethanhartschaumstoffs für Vakuumisolationspaneele.

In dieser Anmeldung verwendete Bezeichnungen haben die folgende Bedeutung:
Unter dem Index (auch Isocyanat-Index, Isocyanat-Kennzahl, oder Kennzahl genannt) wird der Quotient aus der tatsächlich eingesetzten Stoffmenge [mol] an Isocyanat-Gruppen und der tatsächlich eingesetzten Stoffmenge [mol] an gegenüber Isocyanaten reaktiven Wasserstoffatomen, multipliziert mit 100, verstanden:

$$\text{Index} = (\text{Isocyanat-Gruppen [mol]} / \text{gegenüber Isocyanaten reaktive Wasserstoffatome [mol]}) \cdot 100$$

Mit "Funktionalität" oder "f" einer Verbindung ist im Sinne dieser Anmeldung die theoretische Funktionalität gemeint: so beträgt die Funktionalität eines ausschließlich Glycerin-gestarteten Polyols f = 3, die eines ausschließlich Ethylendiamin-gestarteten Polyols f = 4. Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der PolyolKomponente A1) ist somit beispielsweise die zahlenmittlere Funktionalität der Mischung aus den in der Komponente A1) enthaltenden Polyolen in Bezug auf alle enthaltenen gegenüber Isocyanaten reaktiven Wasserstoffatomen gemeint.

Mit "Molgewicht" oder "Molmasse" bzw. "Mn" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Figuren 1 - 4 zeigen jeweils eine Ausführungsform des erfindungsgemäßen Werkzeugs (1) in einer isometrischen Ansicht.

Die Figur 5 zeigt ein Detail der Figur 4.

Die Figur 6 zeigt eine Ausführungsform des erfindungsgemäßen Werkzeugs (1) in einer Aufsicht.

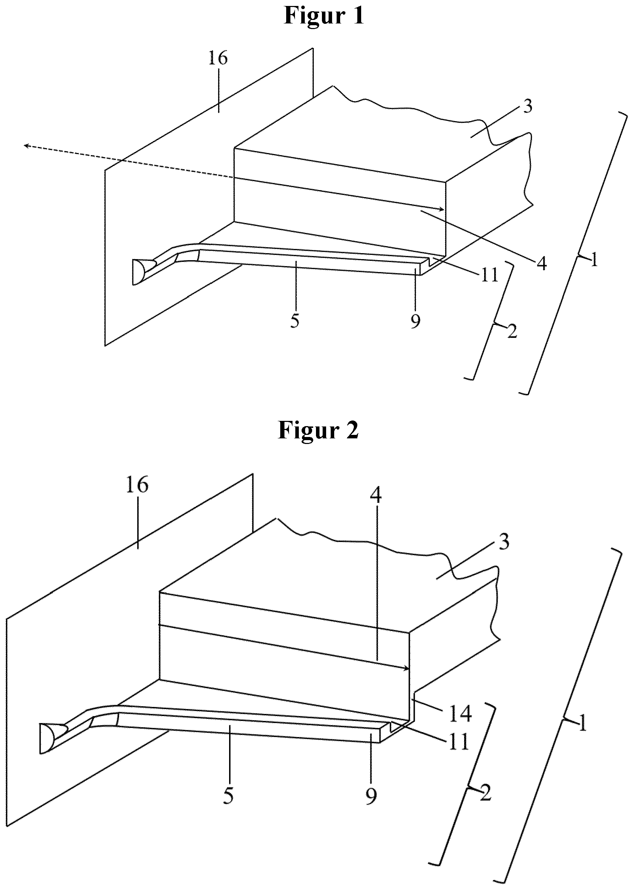

Figur 1 zeigt eine Hälfte einer Ausführungsform eines erfindungsgemäßen Werkzeugs (1), wie durch Symmetrieebene (16) angedeutet. Werkzeug (1) weist Anguss (2) und Kavität (3) auf, wobei Letztere, wie durch geschwungene Linien angedeutet, nur zum Teil abgebildet ist. Die Breite (4) der Kavität (3) bezieht sich auf die gesamte Kavität (3), das heißt nicht nur auf die abgebildete Hälfte des Werkzeugs (1) diesseits der Symmetrieebene (16). Anguss (2) weist einen Verteilerkanal (5), der wiederum ein Ende (9) des Verteilerkanals (5) aufweist, sowie ein Drosselfeld (11) auf.

Figur 2 zeigt eine Hälfte einer Ausführungsform eines erfindungsgemäßen Werkzeugs (1) wie durch Symmetrieebene (16) angedeutet. Wie in Figur 1 weist das Werkzeug (1) die Kavität (3) der Breite (4) (hier nur zur Hälfte dargestellt) und den Anguss (2) umfassend den Verteilerkanal (5) mit dem Ende (9) des Verteilerkanals (5) und das Drosselfeld (11) auf. Zusätzlich weist der Anguss (2) eine Umlenkung (14) auf.

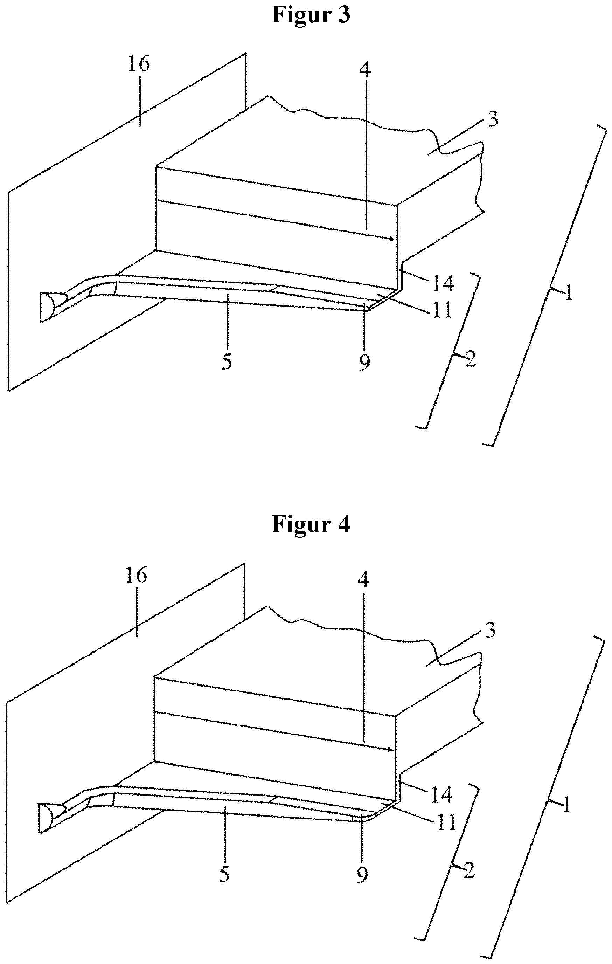

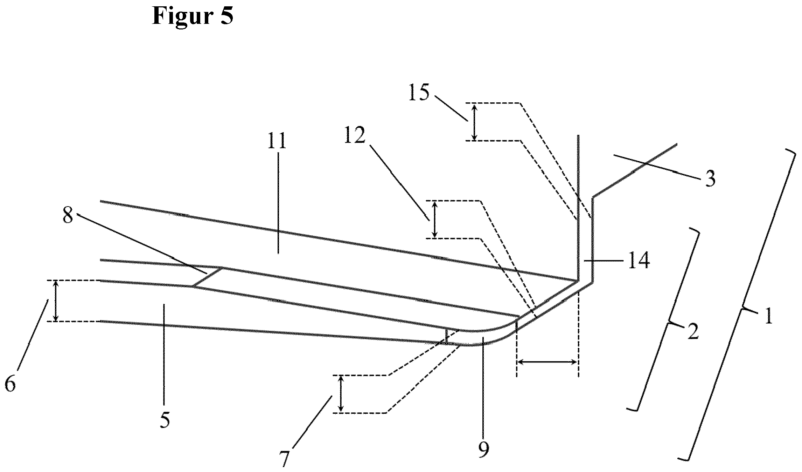

Figur 3 zeigt eine Hälfte einer Ausführungsform eines erfindungsgemäßen Werkzeugs (1) wie durch Symmetrieebene (16) angedeutet. Wie in Figur 2 weist das Werkzeug (1) die Kavität (3) der Breite (4) (hier nur zur Hälfte dargestellt) und den Anguss (2) umfassend den Verteilerkanal (5) mit dem Ende (9) des Verteilerkanals (5), das Drosselfeld (11) und die Umlenkung (14) auf. Zusätzlich weist das Ende (9) des Verteilerkanals (5) eine geringere Höhe als in Figur 2 auf. Die Höhe $h_{VK}$ (6) des Verteilerkanals (5) und die Höhe $h_{VK}'$ (7) des Endes (9) des Verteilerkanals (5) sind in Figur 5 detailliert dargestellt.

Figur 4 zeigt eine Hälfte einer Ausführungsform eines erfindungsgemäßen Werkzeugs (1) wie durch Symmetrieebene (16) angedeutet. Wie in Figur 3 weist das Werkzeug (1) die Kavität (3) der Breite (4) (hier nur zur Hälfte dargestellt) und den Anguss (2) umfassend den Verteilerkanal (5) mit dem Ende (9) des Verteilerkanals (5), das Drosselfeld (11) und die Umlenkung (14) auf. Wie in Figur 3 weist das Ende (9) des Verteilerkanals (5) eine geringere Höhe als in Figur 2 auf. Zusätzlich weist der Verteilerkanal (5) ein abgerundetes Ende (9) auf. Die Höhe $h_{VK}$ (6) des Verteilerkanals (5) und die Höhe $h_{VK}'$ (7) des Endes (9) des Verteilerkanals (5) sind in Figur 5 detailliert dargestellt.

Figur 5 zeigt ein Detail der in Figur 4 gezeigten Ausführungsform eines erfindungsgemäßen Werkzeugs (1) umfassend die Kavität (3) und den Anguss (2), wobei der Anguss (2) den Verteilerkanal (5) mit dem Ende (9) des Verteilerkanals (5), das Drosselfeld (11) und die Umlenkung (14) aufweist. Detailliert dargestellt werden weiterhin die Höhe $h_{VK}$ (6) des Verteilerkanals (5) und die Höhe $h_{VK}'$ (7) des Endes (9) des Verteilerkanals (5). In der gezeigten Ausführungsform entspricht die Höhe $h_{VK}'$ (7) der Höhe $h_{DF}$ (12) des Drosselfeldes (11). Weiterhin wird die Höhe $h_U$ (15) der Umlenkung (14) dargestellt.

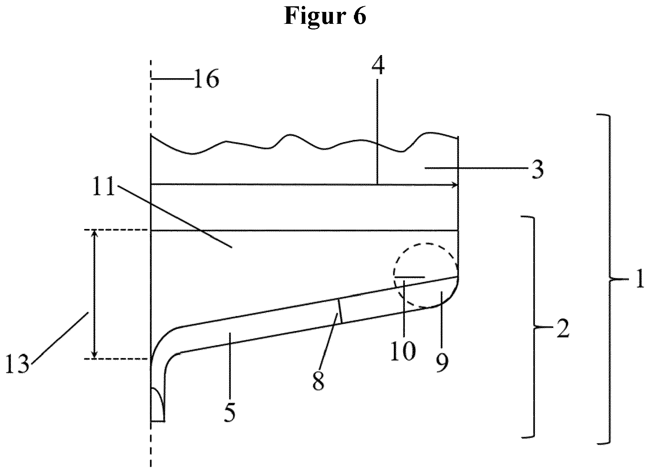

Figur 6 zeigt eine Aufsicht einer Hälfte der in Figur 4 gezeigten Ausführungsform eines erfindungsgemäßen Werkzeugs (1) wie durch Symmetrieebene (16) angedeutet. Das Werkzeug (1) umfasst die Kavität (3) der Breite (4) (hier nur zur Hälfte dargestellt) und den Anguss (2) umfassend den Verteilerkanal (5) der Tiefe $T_{VK}$ (8) mit dem Ende (9) des Verteilerkanals (5) und das Drosselfeld (11) der Tiefe $T_{DF}$ (13). Das abgerundete Ende (9) des Verteilerkanals (5) weist einen Radius 10 auf, der dem Radius eines hypothetischen, dem abgerundeten Ende (9) des Verteilerkanals (5) einbeschriebenen Kreises (in gestrichelten Linien dargestellt) entspricht.

Die Erfindung soll anhand der nachfolgenden Beispiele und Vergleichsbeispiele näher erläutert werden, ohne dass sie in ihrem Umfang durch die Beispiele eingeschränkt wird.

Beispiele

Verschiedene Angussgeometrien zwischen dem Mischkopfende und einer typischen Kavität für Schaumstoffpaneele wurden konstruiert und das Durchström- und Verteilverhalten eines Polyurethanreaktionssystems anhand von Strömungssimulationen analysiert. Hierbei war insbesondere die Strömungscharakteristik in den ersten Zehntelsekunden der Verteilung für potenzielle Lufteinschlüsse, Ablösen und gleichmäßiges Eintreten in die Kavität relevant.

Bei den Strömungssimulationen wurden die Materialeigenschaften für den betrachteten Zeitraum als konstant angesehen. Auch die Prozesseinstellungen wie Eintrittsmassenstrom (1 kg/s) und Werkzeugtemperaturen wurden konstant gehalten. Die Werte der konstanten Parameter ergaben sich z.B. daraus, wie schnell das Material verarbeitet werden muss oder der Prozess wirtschaftlich ist. Dadurch beschränkten sich Änderungen auf die Angussgeometrie, die verwendeten Größen finden sich in Tabelle 1.

**Tabelle 1**

|  | Bsp. 1 | Bsp. 2 | Bsp. 3 | Bsp. 4 | Vergl.-Bsp. 1 |
|---|---|---|---|---|---|
| Durchmesser Mischkopf [mm] | 18 | 18 | 18 | 18 | 18 |
| Breite B der Kavität [mm] | 600 | 600 | 600 | 600 | 600 |
| $h_{VK}$ [mm] | 9 | 9 | 9 | 9 | 9 |
| $h_{VK}'$ [mm] | 9 | 9 | 1 | 1 | 9 |
| $h_{DF}$ [mm] | 1 | 1 | 1 | 1 | 1 |
| $h_U$ [mm] | - | 2 | 2 | 2 | - |
| $B_{ÖVK}$ [mm] | 600 | 600 | 600 | 600 | 300 |
| $B_{ÖDF}$ [mm] | 600 | 600 | 600 | 600 | 300 |
| $T_{VK}$ [mm] | 5,7 | 5,7 | 5,7 | 5,7 | 5,7 |
| $T_{DF}$ [mm] | 84 | 84 | 84 | 84 | 49 |

Es wurde ein handelsübliches Polyurethanreaktionssystem zur Herstellung von Vakuumisolationspaneelen und hierbei die folgenden Materialeigenschaften eingesetzt:

$$\text{Dichte: } 1{,}1 \text{ kg/dm}^3; \text{ Viskosität: } 125 \text{ mPa·s}$$

In Bsp. 1 wurde ein Werkzeug (1) verwendet, das einen Anguss (2) mit den beiden Elementen Verteilerkanal (5) und Drosselfeld (11) wie in Figur 1 dargestellt aufweist. In diesem Fall waren der Verteilerkanal (5) bzw. die Öffnung $Ö_{VK}$ so breit wie die Kavität (3) selbst bzw. die Breite B (4) der Kavität (3), und das Drosselfeld (11) wies eine Öffnung $Ö_{DF}$ so breit wie die Breite B (4) der Kavität (3) auf.

In Bsp. 2 wurde ein Werkzeug (1) verwendet, das weitgehend dem in Bsp. 1 verwendeten Werkzeug (1) entspricht. Zusätzlich wurde eine Umlenkung (14) an das Ende des Drosselfelds (11) angefügt wie in Figur 2 gezeigt.

In Bsp. 3 wurde ein Werkzeug (1) verwendet, wie es in Figur 3 dargestellt ist, das heißt ein Werkzeug (1), das dem in Bsp. 2 verwendeten Werkzeug (1) entspricht, wobei zusätzlich das Ende des Verteilerkanals (5) ein verändertes Ende aufwies. In diesem Beispiel lief die Höhe des Verteilerkanals (5) auf die Höhe des Drosselfelds (11) aus.

In Bsp. 4 wurde ein Werkzeug (1) verwendet, wie es in Figur 4 dargestellt ist, das heißt ein Werkzeug (1), das dem in Bsp. 3 verwendeten Werkzeug (1) entspricht, jedoch erweitert um einen Radius am Ende des zulaufenden Verteilerkanals (5).

In Vergleichsbsp. 1 wurde ein Werkzeug (1) verwendet, das sich von dem in Bsp. 1 verwendeten Werkzeug (1) dadurch unterschied, dass sich Verteilerkanal (5) und Drosselfeld (11) bzw. die Öffnungen $Ö_{VK}$ und $Ö_{DF}$ nur über die Hälfte der Kavität (3) bzw. der Breite B (4) der Kavität (3) erstreckten.

Die Strömungssimulationen der vier Beispielgeometrien (Bsp. 1 - 4) und der Geometrie des Vergleichsbeispiels 1 wurden anhand dreier Kriterien "Homogenes Einströmen in die Kavität", "Spritzervermeidung in Kavität" und "Lufteinschlussvermeidung" bewertet.

Als Referenzwerte wurden die Ergebnisse des Vergleichsbsp. 1 verwendet, die jeweils mit "-" bewertet wurden. Eine Verbesserung eines Parameters wurde mit "+" bzw. "++", je nach Grad der Verbesserung, gekennzeichnet. Die beobachteten Ergebnisse finden sich in Tabelle 2.

**Tabelle 2**

|  | Homogenes Einströmen in die Kavität (3) | Spritzervermeidung in Kavität (3) | Lufteinschlussvermeidung |
|---|---|---|---|
| Bsp. 1 | + | - | - |
| Bsp. 2 | ++ | ++ | - |
| Bsp. 3 | ++ | ++ | + |
| Bsp. 4 | ++ | ++ | ++ |
| Vergleichsbsp. 1 | - | - | - |

Bsp. 1 zeigt, dass ein Verteilerkanal (5) und ein Drosselfeld (11) mit Öffnungen $Ö_{VK}$ und $Ö_{DF}$, die sich über die gesamte Breite B (4) der Kavität (3) erstrecken, dafür sorgen, dass das Reaktionsgemisch sehr homogen, das heißt synchron bzw. mit einheitlicher Fließfront, in die Kavität (3) eintritt.

Bsp. 2 zeigt, dass eine Umlenkung (14) zum einen den Eintritt des Reaktionsgemischs in die Kavität (3) weiter homogenisiert, zum anderen auch dazu beiträgt, den Eintrag von Spritzern in die Kavität (3) zu reduzieren.

Bsp. 3 zeigt, dass das Absenken der Höhe des Verteilerkanals (5) im Bereich dessen Endes (9) auf die Höhe des Drosselfeldes (11) dafür sorgt, dass Lufteinschlüsse reduziert werden. Mutmaßlich und ohne an diese Theorie gebunden zu sein wird das Ende (9) des Verteilerkanals (5) durch den Hinterschnitt, wie in Bsp. 2 zu sehen, nur unzureichend durchströmt, so dass sich während der Injektion des Reaktionsgemischs eine Luftblase bilden könnte. Mit dem veränderten Ende des Verteilerkanals (5) wird der Hinterschnitt verringert und Luft wird direkt mit dem ersten Durchströmen des Materials durch den Anguss (2) verdrängt.

Bsp. 4 zeigt, dass ein abgerundetes Ende (9) des Verteilerkanals (5) Lufteinschlüsse in diesem Bereich noch weiter reduziert.

Ohne an diese Theorie gebunden zu sein, wird vermutet, dass ein Reaktionssystem, um aus einem (zentralen) Zulauf aus dem Mischkopf eine einheitliche Füllung der Kavität (3) zu erzielen, einerseits auf die Breite der Kavität (3) vorverteilt werden sollte. Daher wird im Anguss (2) ein Verteilerkanal (5) vorgesehen. Andererseits soll der Fließwiderstand des Materials aber auf dem Weg zur Kavität (3) möglichst einheitlich sein, um ein lokales Vor- bzw. Nacheilen zu verringern. Dazu wird ein Drosselfeld (11) im Design vorgesehen. Weiterhin sollen das Volumen des Angusses (2) sowie die Fließkanalabmessungen insgesamt klein sein, um Material und Bauraum für das Werkzeug (1) einsparen zu können.

Da das Material bei bestimmten Betriebspunkten von der Wand ablösen kann, besteht die Gefahr von Spritzerbildung. Falls Spritzer gebildet wurden, soll vermieden werden, dass diese Spritzer bis in den Bereich der Kavität (3) geschleudert werden. Dazu kann an das Drosselfeld (11) eine Umlenkung (14) konstruiert werden, gegen die Spritzer prallen würden.

**Patentansprüche**

1.  Werkzeug (1) zur Herstellung eines Schaumstoff-Formkörpers einer Breite B (4) aus einem Reaktionsgemisch in einer Kavität (3) umfassend

    A. die Kavität (3) aufweisend eine innere Dimension der Breite B (4);
    B. einen Anguss (2) zum Befüllen der Kavität (3) mit dem Reaktionsgemisch aufweisend

    (1) eine Öffnung $Ö_{A1}$ zur Aufnahme des Reaktionsgemischs und
    (2) eine Öffnung $Ö_{A2}$, die den Anguss (2) mit der Kavität (3) verbindet; und

    C. eine Vorrichtung zur Erzeugung und Aufrechterhaltung eines Gegendrucks in der Kavität (3) sowie zur schlagartigen Verringerung des Gegendrucks in der Kavität (3),

    wobei der Anguss (2) so gestaltet ist, dass das Befüllen der Kavität (3) mit dem Reaktionsgemisch über wenigstens 75% der Breite B (4) der Kavität (3) im Wesentlichen synchron beginnt.

2.  Werkzeug (1) gemäß Anspruch 1, wobei der Anguss (2) umfasst:

    i. einen Verteilerkanal (5) mit einer Höhe $h_{VK}$ (6) und einer Tiefe $T_{VK}$ (8), aufweisend

    (1) die Öffnung $Ö_{A1}$ zur Aufnahme des Reaktionsgemischs, und
    (2) eine Öffnung $Ö_{VK}$ aufweisend eine Breite $B (4)_{Ö VK}$, die wenigstens 75% der Breite B (4) entspricht, und eine Höhe $h_{Ö VK}$, die geringer ist als die Höhe $h_{VK}$ (6),

    ii. ein Drosselfeld (11) mit einer Höhe $h_{DF}$ (12), die geringer ist als die Höhe $h_{VK}$ (6), und einer Tiefe $T_{DF}$, die größer ist als die Tiefe $T_{VK}$ (8), aufweisend

    (1) die Öffnung $Ö_{VK}$ zur Aufnahme des Reaktionsgemischs aus dem Verteilerkanal (5), und
    (2) eine Öffnung $Ö_{DF}$ aufweisend eine Breite $B (4)_{Ö DF}$, die wenigstens 75% der Breite B (4) entspricht, und eine Höhe $h_{Ö DF}$, die geringer ist als die Höhe $h_{VK}$ (6), wobei die Öffnung $Ö_{DF}$ der Öffnung $Ö_{A2}$ entsprechen kann.

3. Werkzeug (1) gemäß Anspruch 2, wobei der Anguss (2) weiterhin umfasst:
   iii. eine Umlenkung (14) mit einer Höhe $h_U$ (15), die geringer ist als die Höhe $h_{VK}$ (6), und die so gestaltet ist, dass das Reaktionsgemisch bei einem Fließen von dem Drosselfeld (11) in die Kavität (3) wenigstens eine Richtungsänderung um 70 - 110 ° erfährt, aufweisend

   (1) die Öffnung $Ö_{DF}$ zur Aufnahme des Reaktionsgemischs aus dem Drosselfeld (11), und
   (2) die Öffnung $Ö_{A2}$ aufweisend eine Breite $B_{ÖA2}$, die wenigstens 75% der Breite B (4) entspricht.

4. Werkzeug (1) gemäß einem der Ansprüche 2 oder 3, wobei der Verteilerkanal (5) wenigstens ein Ende (9) aufweist und die Höhe des Verteilerkanals (5) im Bereich des Endes (9) eine Höhe $h_{VK}'$ (7) aufweist, die geringer ist als $h_{VK}$ (6).

5. Werkzeug (1) gemäß Anspruch 4, wobei gilt: $h_{VK}'$ (7) = $h_{DF}$ (12).

6. Werkzeug (1) gemäß einem der Ansprüche 2 bis 5, wobei die Öffnung $Ö_{VK}$ eine Höhe $h_{ÖVK}$ aufweist, die 80 - 100% der Höhe $h_{DF}$ (12) entspricht.

7. Werkzeug (1) gemäß einem der Ansprüche 2 bis 6, wobei der Verteilerkanal (5) ein abgerundetes Ende (9) aufweist.

8. Werkzeug (1) gemäß Anspruch 7, wobei das abgerundete Ende (9) einen Radius aufweist, der wenigstens 1/20, bevorzugt wenigstens 1/10, mehr bevorzugt wenigstens 1/4, der Tiefe des Verteilerkanals $T_{VK}$ (8) entspricht.

9. Werkzeug (1) gemäß einem der Ansprüche 2 bis 8, wobei die Umlenkung (14) so gestaltet ist, dass das Reaktionsgemisch bei dem Fließen von dem Drosselfeld (11) in die Kavität (3) wenigstens zwei Richtungsänderungen um, unabhängig voneinander, jeweils 70 - 110 ° erfährt.

10. Verfahren zur Herstellung von Schaumstoffen aus einem Reaktionsgemisch umfassend die Schritte

    A. Bereitstellen eines Reaktionsgemischs in einem Hochdruckmischkopf;
    B. Einbringen des Reaktionsgemischs unter Gegendruck in die Kavität (3) des Werkzeugs (1) gemäß einem der Ansprüche 1 bis 9;
    C. Aufschäumen des Reaktionsgemischs in der Kavität (3), um den Schaumstoff zu erhalten;
    D. Entformen des in Schritt C erhaltenen Schaumstoffs.

11. Verfahren gemäß Anspruch 10, wobei das Einbringen des Reaktionsgemischs unter Gegendruck in die Kavität (3) mit einer mittleren Geschwindigkeit von 0,2 - 4,5 m/s, bevorzugt 0,5 - 2,0 m/s, erfolgt.

12. Verfahren gemäß einem der Ansprüche 10 oder 11, wobei das Reaktionsgemisch ein Polyurethanreaktionsgemisch ist.

13. Verfahren gemäß Anspruch 12, wobei das Polyurethanreaktionsgemisch umfasst

    A. eine gegenüber Isocyanaten reaktive Zusammensetzung umfassend

    A1) eine gegenüber Isocyanaten reaktive Komponente umfassend mindestens eine Polyolkomponente mit einer Funktionalität f> 2,5, die wenigstens ein Polyetherpolyol, Polyesterpolyolen, Polycarbonatpolyol, Polyether-Polycarbonatpolyol, Polyetheresterpolyol oder Mischungen daraus umfasst;
    A2) eine Katalysatorkomponente;
    A3) gegebenenfalls Hilfs- und Zusatzstoffe;

    B. eine Polyisocyanatkomponente
    C. eine Treibmittelkomponente.

14. Verfahren gemäß Anspruch 13, wobei die gegenüber Isocyanaten reaktive Komponente einen Zellöffner und/oder eine Treibmittelkomponente umfassend oder bestehend aus $CO_2$ im überkritischen Zustand umfasst.

15. Verwendung des Werkzeugs (1) gemäß einem der Ansprüche 1 bis 9 zur Herstellung eines Schaumstoffs, insbesondere eines Polyurethanhartschaumstoffs für Vakuumisolationspaneele.

# Figur 1

# Figur 2

# Figur 3

# Figur 4

**Figur 5**

# Figur 6

Europäisches Patentamt
European Patent Office
Office européen des brevets

**EUROPÄISCHER RECHERCHENBERICHT**

Nummer der Anmeldung

**EP 22 17 3040**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Hopmanner Christian ET AL: "Sandwich-RIM-Prozess zur einstufigen Herstellung faserverstärkter Sandwich-Bauteile aus PUR-Decklagen und PUR-Schaumkern", Fachmagazin für die Polyurethanindustrie, 9. Oktober 2016 (2016-10-09), Seiten 1-15, XP055975561, Gefunden im Internet: URL:https://www.fapu.de/index.php/de/facha rtikel/fapu-95-09-10-2016/sandwich-rim-pro zess-zur-einstufigen-herstellung-faservers taerkter-sandwich-bauteile-aus-pur-decklag en-und-pur-schaumkern [gefunden am 2022-10-27] | 1,10, 12-15 | INV. B29C44/10 B29C44/34 B29C44/58 B29C44/42 B29C33/00 |
| A | * Seite 1 – Seite 9 * * Abbildungen 1-3 * ----- | 2-9 | |
| X | Bayer Materialscience: "Engineering Polyurethanes – RIM Part and Mold Design Guide", , 1. Oktober 2008 (2008-10-01), Seiten 1-90, XP055975804, Gefunden im Internet: URL:https://reactioninjectionmolding.com/w p-content/uploads/2013/09/RIM-PartMoldDesi gnGuide.pdf [gefunden am 2022-10-28] | 1,10-15 | |
| A | * Seite 5 – Seite 9 * * Seite 53 – Seite 56 * ----- | 2-9 | RECHERCHIERTE SACHGEBIETE (IPC) B29C B29K |
| A | WO 2021/144218 A1 (COVESTRO DEUTSCHLAND AG [DE]) 22. Juli 2021 (2021-07-22) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 28. Oktober 2022 | Ullrich, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 3040

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2022

| Im Recherchenbericht angeführtes Patentdokument | Datum der Veröffentlichung | Mitglied(er) der Patentfamilie | Datum der Veröffentlichung |
|---|---|---|---|
| WO 2021144218 A1 | 22-07-2021 | CN 113950400 A | 18-01-2022 |
| | | EP 3921129 A1 | 15-12-2021 |
| | | WO 2021144218 A1 | 22-07-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200198389 A1
- WO 2018162372 A1
- EP 2910585 A
- EP 1359177 A
- WO 2010043624 A
- EP 1923417 A

**In der Beschreibung aufgeführte Nicht-Patentliteratur**

- **IONESCU.** Chemistry and Technology of Polyols for Polyurethanes. Rapra Technology Limited, 2005, 55, , 263, , 321, , 419
- Kunststoff-Handbuch. Carl Hanser Verlag, 1993, vol. 7, 104-127